# EUROPÄISCHE PATENTSCHRIFT

(11) **EP 0 943 645 B1**
(45) Veröffentlichungstag und Bekanntmachung des Hinweises auf die Patenterteilung: **09.04.2003**
(21) Anmeldenummer: 99102595.8
(22) Anmeldetag: 11.02.1999
(51) Int. Cl.: C08J 5/22, B01D 71/42

(54) **Lösemittel- und säurestabile Membran auf Basis von Acrylnitril-Copolymer sowie ein Verfahren zur Herstellung dieser Membran**
Solvent- and acid-stable membrane based on acrylonitrile copolymer and process for producing such a membrane
Membrane stable aux solvants et acides à base de copolymère d' acrylonitrile et procédé de fabrication de cette membrane

(30) Priorität: 19.03.1998 DE 19811997
(43) Veröffentlichungstag der Anmeldung: 22.09.1999
(73) Patentinhaber: GKSS-FORSCHUNGSZENTRUM GEESTHACHT GMBH, 21502 Geesthacht (DE)
(72) Erfinder: Dr. Hans-Georg Hicke, 14513 Teltow (DE); Lehmann, Ingeborg, 14513 Teltow (DE); Becker, Margot, 14513 Teltow (DE); Ulbricht, Mathias Dr., 10405 Berlin (DE); Malsch, Günter Dr., 14513 Teltow (DE); Paul, Dieter Prof. Dr., 14532 Kleinmanchnow (DE)
(74) Vertreter: Niedmers, Ole, Dipl.-Phys.

(56) Entgegenhaltungen:
- EP-A- 0 397 119
- EP-A- 0 559 902
- DATABASE WPI Section Ch, Week 8210 Derwent Publications Ltd., London, GB; Class A96, AN 82-18718E XP002111498 & JP 57 018705 A (AGENCY OF IND SCI & TECHNOLOGY), 30. Januar 1982 (1982-01-30)

## Beschreibung

Die Erfindung betrifft eine lösemittel- und säurestabile Membran auf Basis von Polyacrylnitril (PAN) und einem damit copolymerisierten Comonomer, wobei die Membran durch Membranformierung aus der Lösung durch Phaseninversion in Wasser gebildet wird, sowie ein Verfahren zur Herstellung dieser Membran.

Bei der Durchführung von kontinuierlichen Prozessen mit Hilfe von Katalysatoren werden derartige aktive, starke Wechselwirkungskräfte auslösende Stoffe häufig an Trägermaterialien, beispielsweise Membranen, immobilisiert. Dies wird nachstehend anhand der Immobilisierung von Enzymen näher erläutert.

Eine derartige Immobilisierung ist beispielsweise dann angezeigt und erwünscht, wenn
1. sich während der Reaktion der pH-Wert drastisch verschiebt und die sich bei der Reaktion bildenden Produkte rasch aus der Umgebung des Enzyms zu entfernen sind,
2. die im zur Anwendung gebrachten Medium, beispielsweise im wäßrigen Medium, entstehenden Produkte zur Gewährleistung der kontinuierlichen Prozeßführung stetig in ein anderes Lösungsmittel, beispielsweise ein organisches Lösungsmittel, überführt werden müssen und/oder
3. die Produkt- und Enzymmoleküle ähnliche hydrodynamische Durchmesser aufweisen und deshalb nicht durch üblicherweise praktizierte Separationsverfahren kontinuierlich voneinander getrennt werden können.

Soll der enzymatische Prozeß unter Beachtung der oben aufgeführten Prozeßparameter außerdem sogar noch hinsichtlich einer besonderen Produktzusammensetzung beeinflußt werden, dann ist das nur möglich, wenn die üblicherweise eingesetzten Reaktoren (V > 100 ml) um Größenordnungen verkleinert werden.

Die Poren von Membranen (V ∼ 1 µl) kann man nun als Mikroreaktoren betrachten, in denen die für die Prozeßführung gewünschten Enzyme kovalent immobilisiert werden können. Für eine definierte Prozeßgestaltung können die Substrate dann vor allem konvektiv an die in den Poren immobilisierten Enzymmoleküle herangeführt werden. Das Mikromilieu für die Enzymmoleküle läßt sich bei sensitiven Reaktionen so leichter beherrschen.

Die angestrebte kontinuierliche Prozeßführung mit derartigen Membranen macht es nun erforderlich, daß eine allmähliche Verkeimung des gesamten Reaktionssystems vermieden wird.

Für eine derartige kontinuierliche Prozeßführung geeignete Membranen wurden bisher vor allem durch Begasung mit Ethylenoxid, durch eine Behandlung mit Sekundärplasma oder mit Hilfe verschiedener chemischer Desinfektionsmittel sterilisiert (PDI, Handbook Series: The Effect of Sterilization Methods on Plastics and Elastomers, Rapra Technology ltd., Shawbury, Shrewsbury, Shropshire SY4 4NR, UK 1994).

Insbesondere im Medizinbereich wird grundsätzlich gefordert, daß für eine Anwendung aller Stoffe, die in den menschlichen Körper gelangen können, keine Sterilisationsverfahren eingesetzt werden, die zu chemischen Veränderungen des zu behandelnden Gutes führen können. Dies ist bei allen bisher angewandten Bestrahlungsverfahren und natürlich auch bei einer chemischen Desinfektion nicht auszuschließen. Bei der Begasung mit Ethylenoxid besteht insbesondere dadurch ein Risiko, daß nach erfolgter Sterilisation eine vollkommene Entfernung des Gases nicht sichergestellt werden kann.

Neben diesen genannten, bekannten, jedoch mit bestimmtem Risiko behafteten Sterilisationsverfahren stellt die Heißdampfsterilisation im Autoklaven die sicherste Methode dar. Alle Glas- und Schlauchmaterialien sowie Metallteile lassen sich problemlos autoklavieren. Die Heißdampfsterilisation ist zudem mit den technisch verfügbaren Apparaturen universell einsetzbar und daher favorisiert. Allerdings beeinflußt auch die Heißdampfsterilisation die bisher verfügbaren Membranen negativ.

Dies gilt insbesondere für Membranen, die an ihrer Oberfläche reaktive Gruppen besitzen, um beispielsweise Enzymmoleküle kovalent zu binden. Bei derartigen Membranen geht die Reaktivität bei der Heißdampfsterilisation verloren.

Aufgabe der vorliegenden Erfindung ist es, eine lösemittel- und säurestabile sowie autoklavierbare Membran bereitzustellen, auf und in der insbesondere Katalysatoren immobilisiert werden können.

Gelöst wird diese Aufgabe durch die Lehre der Ansprüche.

Die erfindungsgemäße lösemittel- und säurestabile Membran ist aufgebaut aus einem bestimmten Acrylnitrilcopolymer, das in üblicher Weise bzw. auf per se bekannte Weise erhalten wird. Dieses Copolymer wird in einem Lösungsmittel, Dimethylformamid, gelöst; aus dieser Lösung wird die Membran mit Hilfe der Phaseninversion in Wasser oder in wäßriger Lösung auf üblicher Weise bzw. auf per se bekannte Weise formiert.

Die erfindungsgemäße Membran zeichnet sich nun dadurch aus, daß als Comonomer Glycidylmethacrylat (Methacrylsäureglycidylester) eingesetzt wird. Die erfindungsgemäße Membran ist somit aus einem Acrylnitril-glycidylmethacrylat-copolymer aufgebaut.

Mit einem unterschiedlichen Glycidylmethacrylat (GMA)-gehalt des eingesetzten Poly(acrylnitril-co-glycidylmethacrylats) (PANGMA) kann die Funktionalgruppendichte für die spätere Enzymbindung, die weiter unten beschrieben wird, an den entsprechenden Membranen eingestellt werden.

Für die radikalinitiiert entweder mit Ammoniumperoxi disulfat (APS) oder 2,2-Azoisobutyronitril (AIBN) in Dimethylformamid hergestellten Poly-(AN-co-GMA)-Lösungscopolymerisate wurde die Einbaurate der statistisch in das Membranpolymer integrierten GMA-Reaktivsequenz im Konzentrationsbereich von c_{GMA} = 1 bis 49 Mol%, entsprechend eines molaren Anteils GMA im Monomergemisch von 0,1 bis 25 Mol% variiert.

Zur Absicherung des membranbildenden Verhaltens der Reaktivcopolymere erfolgte eine Ausbalancierung des [Monomer]/[Initiator]-Konzentrationsverhältnisses bei zugrundegelegter Temperaturführung (T_{APS} = 50 °C, T_{AIBN} = 60 °C) derart, daß die kinetisch kontrollierbare Molmasse der entstehenden Produkte ein mittleres Zahlenmittel von Mn > 40 KD (kg/mol) aufweist. Da entsprechend der Copolymerisationsparameter r des Monomerenpaares (r_{AN} = 0,14, r_{GMA} = 1,32) GMA verstärkt in das Copolymer eingebaut wird und folglich im Monomergemisch verarmt, wurden die Umsätze U wegen Begrenzung der chemischen Veruneinheitlichung als Funktion der Laufzeit (t_{APS} ≤ 6 h, t_{AIBN} ≤ 18 h) auf U ≤ 30 % limitiert.

Zur Herstellung der Membrangießlösung (20 Masse-% Polymerfeststoff) wurden das durch Ausfällung/Trocknung erhaltene Polymerpulver (vorzugsweise APS-initiiertes Produkt), fallweise aber auch direkt die entmonomerisierte/aufkonzentrierte Polymerisationslösung (vorzugsweise AIBN-initiiertes Produkt) eingesetzt.

Der Anteil des Glycidylmethacrylats als Comonomersequenz macht vorzugsweise 1 bis 49 mol%, insbesondere 1 bis 15 mol%, des PAN-Copolymers aus. Wenn hier von einem Bereich von 1 bis 49 mol% bzw. 1 bis 15 mol% die Rede ist, dann sind damit sämtliche dazwischenliegenden Einzelwerte, insbesondere ganzzahligen Einzelwerte, umfaßt und offenbart, beispielsweise 1,2,3, ..... 11,12,13, ..... 18, 19, 20,..... 28,29,30, .... 38, 39, 40, ..... 45,46,47 und 48.

Nach dem Phaseninversions-Verfahren, gemäß dem die erfindungsgemäße Membran erhalten wird, kann im übrigen aus der Acrylnitril-glycidylmethacrylat-copolymerlösung eine unterschiedliche Permeabilität insbesondere durch Variation der Gießlösungskonzentration, der Fällbadzusammensetzung und der Fällbadtemperatur eingestellt werden.

Nach der Membranformierung wird diese Membran mit Ammoniak nachbehandelt, indem sie entweder beispielsweise mit gasförmigem Ammoniak nachbehandelt wird oder in ein Bad, vorzugsweise mit wäßriger Ammoniaklösung, zur Nachbehandlung getaucht wird.

Einer der wesentlichen Aspekte der erfindungsgemäßen Membran ist darin zu sehen, daß die vorhandenen Epoxygruppen durch Ammoniak zwar erwartungsgemäß aminiert werden. Die dabei gebildeten primären Aminogruppen vernetzen dann aber überraschenderweise trotz eines erheblichen Ammoniaküberschusses spontan mit benachbarten Expoxygruppen unter Bildung sekundärer bzw. tertiärer Aminogruppen. Dadurch wird die erfindungsgemäße Membran einmal gegenüber polaren und unpolaren Lösungsmitteln unlöslich und zum anderen stabil gegenüber starken Säuren.

Die so erhältliche erfindungsgemäße Membran ist dadurch zudem autoklavierbar. Nach einer bevorzugten Ausführungsform schließt sich daher nach der Ammoniakbehandlung eine Autoklavierung an. Die Permeabilität der erfindungsgemäßen Membran verringert sich dabei um so weniger, je höher der Vernetzungsgrad ist.

Die erfindungsgemäße Membran kann überraschenderweise ohne die sonst üblichen Vorkehrungen an der Luft getrocknet werden. Dies geschieht zweckmäßigerweise nach der Autoklavierung, kann jedoch auch vorher geschehen.

Durch die Einstellung der Konzentration, Temperatur und Reaktionszeit können bei der Nachbehandlung mit Ammoniak die Konzentration an Aminogruppen und der Vernetzungsgrad sowie der Rest-Epoxidgehalt für weitere Nachbehandlungen gezielt eingestellt werden. Die Membran kann zudem nach dem Autoklavieren ohne Zusatz von Additiven bzw. ohne aufwendigen Lösungsmittellaustausch an der Luft formstabil getrocknet werden.

Die erfindungsgemäß erhältliche Membran kann als säurestabile Ultrafiltrations-Membran eingesetzt werden und ist kompaktionsstabil sowie zur Trennung von in organischen Lösungsmitteln gelösten Stoffen geeignet.

Nach einer bevorzugten Ausführungsform werden auf der erfindungsgemäßen bzw. der erfindungsgemäß erhältlichen Membran Wirkstoffe immobilisiert bzw. daran gebunden. Es kann sich bei diesen Wirkstoffen bzw. Katalysatoren um solche beliebiger Natur handeln, die in der Lage sind, durch Absorption und Desorption von Substraten chemische bzw. biochemische Prozesse zu beeinflussen bzw. überhaupt erst zu ermöglichen. Bei diesen Wirkstoffen bzw. Katalysatoren handelt es sich vorzugsweise um Enzyme, die an noch vorhandene Expoxy-Gruppen und/oder Aldehydgruppen, welche aus den zunächst entstandenen Aminogruppen nach Aktivierung mit Glutardialdehyd gebildet wurden, kovalent gebunden werden.

Mit Hilfe der erfindungsgemäßen, Enzyme tragenden Membran ist es möglich, enzymatische Reaktionen mit Hilfe von Membranen unter Verwendung geeigneter Enzyme und Substrate in organischen Lösungsmitteln, beispielsweise DMF, durchzuführen.

Durch unterschiedliche Glycidylmethacrylat-Gehalte und Reaktionszeiten mit Ammoniak bei der Nachbehandlung kann die erfindungsgemäße Membran neben der Lösemittel- und Säurestabilität zusätzlich noch durch nicht umgesetzte Epoxygruppen eine Bifunktionalität erhalten. Die so erhaltene bifunktionelle Membran kann für die zusätzliche Kopplung mit anderen Agenzien eingesetzt werden.

Die erfindungsgemäße Membran kann dabei sowohl als Flachmembran als auch als Hohlfasermembran eingesetzt werden.

Erfindungsgemäß wird somit eine lösungsmittel- und säurestabile sowie lufttrockene Reaktivmembran bereitgestellt, die für die Ultrafiltration von in organischen Lösungsmitteln gelösten Stoffen und darüber hinaus vorzugsweise zur Kopplung von Stoffen mit chemischer oder biologischer Funktionalität eingesetzt werden kann. Die Poren dieser erfindungsgemäßen Membran dienen dabei als Mikroreaktoren. Die chemische Funktionalität und Porenmorphologie wird bei der thermischen Sterilisation nicht verändert. Die erfindungsgemäße Reaktivmembran ist somit lösemittelstabil und kann autoklaviert sowie getrocknet werden, ohne dabei ihre Fähigkeit zu verlieren, Wirkstoffe zu binden, insbesondere Enzyme kovalent zu binden.

Die Erfindung wird nachfolgend anhand der bevorzugte Ausführungen darstellenden Beispiele näher erläutert.

### Beispiel 1:

Zur Herstellung von erfindungsgemäßen Membranen wurde als Polymer Poly(acrylnitril-co-glycidylmethacrylat) PANGMA mit 8,1 mol-% Glycidylmethacrylat (GMA) eingesetzt; die Molmasse M (auf PAN bezogen) betrug 55.000.

Die Ausgangsmembran wurde aus ca. 19,5 %iger PGMAAN-Lösung in DMF auf einem Vlies (Histar 100) durch Phaseninversion hergestellt. Die erhaltenen Daten waren folgende:
Membran 1 J_{W} = 5039 l/hm²bar
Membran 2 J_{W} = 4172 l/hm²bar.

J_{W} in l/hm²bar bezeichnet den Wasserfluß durch eine Membran. Die Menge Wasser, die bei einem bestimmten angelegten Druck durch die Membran zu fließen vermag, wird als grobes Maß für den Vergleich der Permeationseigenschaften unterschiedlicher Membranen eines Membrantyps verwendet.

Die Membranen wurden 22 h bei 45 °C in 25 %iger Ammoniaklösung nachbehandelt, mit Wasser neutral gewaschen und 30 min bei 121 °C autoklaviert. Die Membrankenndaten für diese Membranen vor und nach dem Autoklavieren sind folgende:

| | J_{W}l/hm²bar | J_{W}l/hm²bar |
|---|---|---|
| | vor dem Autoklavieren | nach dem Autoklavieren |
| Membran 1 | 2343 | 1669 |
| Membran 2 | 2150 | 1495 |

### Beispiel 2:

Es wurden erfindungsgemäße Membranen für die Enzymimmobilisierung hergestellt.

Die Membrandaten für aminierte Membranen (100 %ige Ammonolyse, keine Epoxygruppen mehr nachweisbar) sind folgende:
Membran 3 J_{W} = 3980 l/hm²bar
Membran 4 J_{W} = 3595 l/hm²bar.

Die Membrankennzeichen für aminierte und autoklavierte Membranen sind folgende:
Membran 3 J_{W} = 1348 l/hm²bar
Membran 4 J_{W} = 1557 l/hm²bar.

Auf den aminierten und autoklavierten Membranen wurde nach Aktivierung mit Glutaraldehyd Amyloglucosidase immobilisiert (Bedingungen: 10 %-ige Glutaraldehydlösung; Amyloglucosidase 0,5 % in Phosphatpuffer, pH = 7). Es wurden folgende Membrankenndaten erhalten:
Membran 3 J_{W} 995 l/hm²bar
Enzymaktivität EA = 304 mU/cm²
Membran 4 J_{W} = 1220 l/hm²bar
Enzymaktivität EA = 365 mU/cm²

Zu Vergleichszwecken wurden weitere aminierte und autoklavierte Membranen hergestellt und an diesen Amyloglucosidase ohne vorherige Aktivierung mit Glutaraldehyd immobilisiert. Die Membrankenndaten sind folgende:

Aminierte Membranen (100 %ige Ammonolyse, keine Epoxygruppen mehr vorhanden)
Membran 5 J_{W} = 3550 l/hm²bar
Membran 6 J_{W} = 4236 l/hm²bar.

Aminierte und autoklavierte Membranen:
Membran 5 J_{W} = 1680 l/hm²bar
Membran 6 J_{W} = 1845 l/hm²bar.

Membranen nach Enzymimmobilisierung:
Bedingungen: Amyloglucosidase 0,5 % in Phosphatpuffer pH = 7
Membran 5 J_{W} = 1284 l/hm²bar
Enzymaktivität EA = = 18 mU/cm²

Membran 6 J_{W} = 1348 l/hm²bar
Enzymaktivität EA = = 15 mU/cm².

### Beispiel 3:

PANGMA-Membranen (mit 13 mol-% GMA) wurden einer 100 %-igen Ammonolyse unterworfen, mit Wasser neutral gewaschen und getrocknet. Die Membranen wurden bei Raumtemperatur (20 °C) ca. 20 h mit verschiedenen, insbesondere sehr polaren organischen Lösungsmitteln behandelt. Die Löslichkeit wurde gravimetrisch bestimmt. Es ergab sich, daß die Membranen in Aceton, DMF, DMSO, Hexafluorisopropanol, Hexamethylphosphorsäuretriamid, n-Methylpyrrolidon (NMP) und THF unlöslich waren.

### Beispiel 4:

Analog zu Beispiel 1 wurden ebensolche PANGMA-Membranen (mit 8,1 mol% GMA) mit Ammoniak nachbehandelt und danach autoklaviert. Mit diesen Membranen wurde eine in DMF gelöste Polystyren-Lösung ultrafiltriert.

Die Lösung enthielt 0,1 g Polystyren 661644 (FERAK) in 100 ml DMF.
J_{DMF} (nach Ammonolyse): 163 l/hm²bar
J_{DMF} (nach Autoklavieren): 108 l/hm²bar
J_{PS/DMF}-Lösung (nach Autoklavieren): 21 l/hm²bar
Rückhaltung für Polystyren: 91 % (gemessen mit GPC)

## Patentansprüche

1. Lösemittel- und säurestabile Membran auf Basis von Polyacrylnitril (PAN) und einem damit copolymerisierten Comonomer sowie gebildet durch Membranformierung aus der Lösung durch Phaseninversion in Wasser, dadurch erhältlich, daß als Comonomer Glycidylmethacrylat eingesetzt wird und die Membran mit Ammoniak nachbehandelt wird.

2. Membran nach Anspruch 1, dadurch erhältlich, daß sie in eine wäßrige Ammoniaklösung zur Nachbehandlung getaucht oder mit gasförmigem Ammoniak nachbehandelt wird.

3. Membran nach Anspruch 1 oder 2, dadurch erhältlich, daß sie im Anschluß an die Nachbehandlung autoklaviert wird.

4. Membran nach Anspruch 3, dadurch erhältlich, daß die Autoklavierung mit Ammoniak erfolgt.

5. Membran nach einem der vorhergehenden Ansprüche, dadurch erhältlich, daß sie vor oder nach dem Autoklavieren an der Luft getrocknet wird.

6. Membran nach einem der vorhergehenden Ansprüche, dadurch erhältlich, daß Wirkstoffe, insbesondere Enzyme, auf ihr immobilisiert bzw. an sie gebunden werden, insbesondere nach Aktivierung mit einem Aktivierungsreagenz.

7. Membran nach Anspruch 6, dadurch erhältlich, daß die Enzyme an noch vorhandene Epoxygruppen und/oder Aldehydgruppen, welche aus den zunächst entstandenen Aminogruppen nach Aktivierung mit Glutardialdehyd gebildet wurden, kovalent gebunden werden.

8. Membran nach einem der vorhergehenden Ansprüche, **dadurch gekennzeichnet, daß** sie als Flachmembran oder als Hohlfadenmembran vorliegt.

9. Verfahren zur Herstellung einer lösemittelstabilen Membran, bei dem man Acrylnitril mit einem damit copolymerisierbaren Comonomer copolymerisiert und die Membran durch Formierung durch Phaseninversion in Wasser ausbildet, **dadurch gekennzeichnet, daß** man als Comonomer Glycidylmethacrylat einsetzt und die Membran mit Ammoniak nachbehandelt.

10. Verfahren nach Anspruch 9, **dadurch gekennzeichnet, daß** man eine oder mehrere der in den Ansprüchen 2 bis 7 beschriebenen Verfahrensmaßnahmen durchführt.

## Claims

1. Solvent-stable and acid-stable membrane based on polyacrylonitrile (PAN) and a comonomer copolymerised therewith and also constructed by membrane formation from solution by phase inversion in water, obtainable in that glycidyl methacrylate is used as comonomer and the membrane is after-treated with ammonia.

2. Membrane according to Claim 1, obtainable in that it is dipped into aqueous ammonia solution as an after-treatment or is after-treated with gaseous ammonia.

3. Membrane according to Claim 1 or 2, obtainable in that it is autoclaved following the after-treatment.

4. Membrane according to Claim 3, obtainable in that the autoclaving takes place with ammonia.

5. Membrane according to one of the foregoing Claims, obtainable in that it is dried in air before or after autoclaving.

6. Membrane according to one of the foregoing Claims, obtainable in that active substances, in particular enzymes, are immobilised onto it and/or bonded to it, especially after activation with an activating reagent.

7. Membrane according to Claim 6, obtainable in that the enzymes are covalently bonded to epoxy groups and/or aldehyde groups that are still present and which were formed from the amino groups initially formed following activation with glutaric dialdehyde.

8. Membrane according to one of the foregoing Claims, **characterized in that** it is present as a flat membrane or as a hollow fibre membrane.

9. Process for manufacturing a solvent-stable membrane in which acrylonitrile is copolymerised with a comonomer that is copolymerisable therewith and the membrane is constructed by forming by phase inversion in water, **characterized in that** glycidyl methacrylate is used as the comonomer and the membrane is after-treated with ammonia.

10. Process according to Claim 9, **characterized in that** one or more of the process procedures described in Claims 2 to 7 is performed.

## Revendications

1. Membrane stable aux solvants et aux acides, à base de polyacrylonitrile (PAN) et d'un comonomère copolymérisé avec celui-ci, formée par formation de membrane à partir d'une solution par inversion de phase dans l'eau, pouvant être obtenue en ce que l'on met en oeuvre comme comonomère, le méthacrylate de glycidyle et que la membrane est traitée ultérieurement avec de l'ammoniac.

2. Membrane selon la revendication 1, pouvant être obtenue en ce qu'elle est immergée dans une solution aqueuse d'ammoniaque comme traitement ultérieur ou qu'elle est traitée ultérieurement avec de l'ammoniac gazeux.

3. Membrane selon la revendication 1 ou 2, pouvant être obtenue en ce qu'elle est autoclavée en plus du traitement ultérieur.

4. Membrane selon la revendication 3, pouvant être obtenue en ce que le traitement en autoclave est réalisé avec de l'ammoniac.

5. Membrane selon l'une quelconque des revendications précédentes, pouvant être obtenue en ce qu'elle est séchée à l'air avant ou après le traitement en autoclave.

6. Membrane selon l'une quelconque des revendications précédentes, pouvant être obtenue en ce que des agents actifs, en particulier des enzymes, sont immobilisés sur celle-ci ou liés à celle-ci, en particulier après activation avec un réactif d'activation.

7. Membrane selon la revendication 6, pouvant être obtenue en ce que les enzymes sont liées de manière covalente à des radicaux époxy encore présents, et/ou des radicaux aldéhyde qui sont formés à partir des radicaux amino d'abord formés après activation avec le glutaraldéhyde.

8. Membrane selon l'une quelconque des revendications précédentes, pouvant être obtenue en ce qu'elle se présente sous la forme d'une membrane plane ou une membrane de type fibre creuse.

9. Procédé de préparation d'une membrane stable aux solvants, dans lequel on copolymérise l'acrylonitrile avec un comonomère copolymérisable avec lui et la membrane est formée par formation par inversion de phase dans l'eau, **caractérisé en ce que** l'on met en oeuvre le méthacrylate de glycidyle comme comonomère et **en ce que** l'on traite ultérieurement avec de l'ammoniac.

10. Procédé selon la revendication 9, **caractérisé en ce que** l'on réalise une ou plusieurs étapes de procédé décrites aux revendications 2 à 7.
